(19) Europäisches Patentamt
European Patent Office
Office européen des brevets

(11) **EP 3 945 097 B1**

(12) **EUROPEAN PATENT SPECIFICATION**

(45) Date of publication and mention
of the grant of the patent:
**03.05.2023   Bulletin 2023/18**

(21) Application number: **20188954.0**

(22) Date of filing: **31.07.2020**

(51) International Patent Classification (IPC):
**C08F 2/00** (2006.01)       **C08L 23/12** (2006.01)
**C08F 210/06** (2006.01)       **C08F 210/16** (2006.01)

(52) Cooperative Patent Classification (CPC):
(C-Sets available)
**C08L 23/12; C08F 210/06; C08F 210/16;**
C08L 2205/025; C08L 2205/03; C08L 2205/035;
C08L 2207/02                                (Cont.)

(54) **HIGH FLOW HETEROPHASIC PROPYLENE COPOLYMER COMPOSITION HAVING IMPROVED IMPACT PROPERTIES**

HETEROPHASISCHE PROPYLEN-COPOLYMERZUSAMMENSETZUNG MIT HOHER
FLIESSFÄHIGKEIT UND VERBESSERTEN SCHLAGZÄHIGKEITSEIGENSCHAFTEN

COMPOSITION DE COPOLYMÈRE DE PROPYLÈNE HÉTÉROPHASIQUE À FLUIDITÉ ÉLEVÉE
PRÉSENTANT DE MEILLEURES PROPRIÉTÉS DE RÉSISTANCE AUX CHOCS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.02.2022   Bulletin 2022/05**

(73) Proprietor: **Borealis AG**
**1020 Vienna (AT)**

(72) Inventors:
• **TRANNINGER, Cornelia Anita**
**4021 Linz (AT)**
• **LUMMERSTORFER, Thomas**
**4021 Linz (AT)**

(74) Representative: **Kador & Partner Part mbB**
**Corneliusstraße 15**
**80469 München (DE)**

(56) References cited:
EP-A1- 3 015 504       WO-A1-2013/041507
WO-A1-2017/148970

(52) Cooperative Patent Classification (CPC): (Cont.)

C-Sets
**C08F 210/06, C08F 4/6465;**
**C08F 210/06, C08F 4/6492;**
**C08F 210/06, C08F 4/651;**
**C08F 210/06, C08F 4/6546;**
**C08F 210/06, C08F 210/16, C08F 2500/12,**
**C08F 2500/35, C08F 2500/27, C08F 2500/17,**
**C08F 2500/15, C08F 2500/34, C08F 2500/33,**
**C08F 2500/39;**
**C08F 210/16, C08F 2/001;**

**C08L 23/12, C08L 23/12, C08L 23/12, C08L 23/16;**
**C08L 23/12, C08L 23/12, C08L 23/16**

C-Sets

**Description**

The present invention relates to a heterophasic propylene copolymer composition comprising a heterophasic propylene copolymer (HECO), comprising a matrix (A) comprising a propylene homo- or copolymer, said propylene homo- or copolymer comprises at least two propylene homo- and/or copolymer fractions and an elastomeric propylene copolymer (B) dispersed in the matrix. The present invention further relates to a process for the preparation of such heterophasic propylene copolymer compositions, articles made therefrom and uses of the heterophasic propylene copolymer compositions.

Polymers, like polypropylene, are increasingly used in different demanding applications; especially in packaging applications. Simultaneously, there is an ongoing search for tailored polymers which meet the requirements of these applications. The demands can be challenging, since many polymer properties are directly or indirectly interrelated, i.e. improving a specific property can only be accomplished on the expense of another property. Stiffness can for instance be improved by increasing the crystallinity and/ or the relative amount of homopolymer within the composition. As a consequence, the material becomes more brittle, thereby resulting in poor impact properties. Moreover, stiffness can be improved by increasing the melt flow rate, however, this also leads to significant deterioration of impact properties. Thus, impact behavior and melt flow rate of a polymer behave in a conflicting manner.

It is known that impact strength of polypropylene can be improved by dispersing an elastomeric! rubber phase in the polymer matrix, thereby obtaining a heterophasic propylene copolymer composition.

There is an increasing market need for light-weight consumer packaging which can be manufactured with lower wall thicknesses, allowing for energy and material savings. In order to provide a material equipped with these features, a highly stiff material with good impact properties and, especially exhibiting ductile failure in puncture testing, needs to be developed. The high stiffness enables lower wall thicknesses of a packaging article.

Furthermore, cycle time reduction is possible since a certain stiffness needed for demoulding of the specimen is reached at shorter cooling times.

Additionally, the materials should show high flowability. Otherwise, injection moulding of specimen with thin wall thickness is not possible. High flow materials generally show high stiffness due to shorter polymer chains of high stereoregularity. However, the impact performance becomes reduced due to these shorter polymer chains which form less entanglement.

Thus, the challenge is to obtain a material, i.e. a heterophasic propylene copolymer composition of high flowability and high stiffness/ impact balance.

Such heterophasic propylene copolymer compositions can comprise a matrix being either a propylene homopolymer or a random propylene copolymer in which an amorphous phase containing a propylene copolymer rubber (elastomer) is dispersed. The polypropylene matrix contains (finely) dispersed inclusions which are not part of the matrix and said inclusions contain the elastomer. The term inclusion indicates that the matrix and the inclusion form different phases within the heterophasic propylene copolymer, said inclusions being for instance visible by high resolution microscopy - like electron microscopy, scanning force microscopy or atomic force microscopy. Further, sometimes the heterophasic polypropylene may contain to some extent a crystalline polyethylene, which is a by-reaction product obtained by the preparation of the heterophasic propylene copolymer. Such crystalline polyethylene is present as inclusion of the amorphous phase due to thermodynamic reasons.

Many different types of heterophasic systems have been described depending on the individual requirements.

From WO 2012/016965 A1 heterophasic propylene copolymers (HECO) are known. These HECOs are prepared in a multi-stage polymerization process in the presence of a specific Ziegler-Natta procatalyst containing a phathalic ester in combination with a specifically selected external donor. There is, however, a common market request for polymers being free of phthalic acid compounds.

From EP 3 015 504 A1 further HECOs are known which are likewise prepared in a multi-stage polymerization process, but the catalyst system is phthalate-free. The thus obtained HECOs comprise (A) a crystalline propylene homopolymer matrix, (B) a dispersed phase comprising an amorphous propylene copolymer and (C) a crystalline ethylene copolymer. However, the products described in this application have limited impact strength.

Moreover, from WO 2017/ 148970 A1, phthalate-free HECOs are known which are again prepared in a multi-stage polymerization process. These HECOs comprise (A) a bi- or multimodal polypropylene matrix, (B) an elastomeric propylene copolymer as a dispersed phase and (C) optionally a crystalline ethylene copolymer. The products described in this application have limited impact strength at low temperatures and exhibit brittle failure in the instrumented falling weight test.

Since some phthalate-compounds are under suspicion of generating negative health and environmental effects, there is an increasing demand on the market for "phthalate-free polypropylene" suitable for various applications, such as packaging, medical applications and personal care.

However, up to now the mechanical properties of polypropylenes produced with phthalate-free catalysts did not meet all of the desired requirements, especially in view of stiffness/ impact-balance.

Therefore, there is still a need for heterophasic polypropylene compositions showing high flowability and an improved stiffness/ impact-balance and being especially suitable for thin wall injection moulded applications. Ideally, such HECOs are furthermore suitable for applications at low temperatures, i.e. applications at temperatures of 0°C or less.

Hence, it is an object of the present invention to provide such a material. More specifically, it is an object of the present invention to provide a heterophasic propylene copolymer composition obtainable by a multi-stage polymerization process and exhibiting the above mentioned unique balance of properties.

It has surprisingly been found that the above objective can be achieved by a heterophasic propylene copolymer composition with comparatively high melt flow rate, comprising specific matrix and elastomer design.

The present invention concerns an, optionally nucleated, propylene polymer composition and uses thereof which fulfill the high stiffness-impact-requirement and, preferably, also meet legal, as well as health and environmental requirements.

In a further aspect, the invention concerns a polymerization method suitable for the production of the nucleated propylene polymer composition.

## Summary of the Invention

The present invention is directed to a heterophasic propylene copolymer composition comprising a heterophasic propylene copolymer (HECO), comprising, or consisting of,

(a) a matrix (A) comprising a propylene homo- or copolymer, said propylene homo- or copolymer comprises, or consists of, at least two propylene homo- and/or copolymer fractions, propylene homo- or copolymer fraction (A1) and propylene homo- or copolymer fraction (A2),

wherein propylene homo- or copolymer fraction (A1) has a melt flow rate MFR2 (230°C) of 250 g/10 min or more, preferably 300 g/10min or more, more preferably of more than 300 g/10min and propylene homo- or copolymer fraction (A2) has a melt flow rate MFR2 (230°C) in the range of from 0.5 to 25 g/10 min, preferably in the range of from 1 to 20 g/10min;

and

(b) an elastomeric propylene copolymer (B), preferably a uni- or bimodal elastomeric propylene copolymer, more preferably a unimodal elastomeric propylene copolymer, dispersed in said matrix (A),

wherein

(i) the heterophasic propylene copolymer composition has a melt flow rate MFR2 (230°C) of at least 50 g/10 min;

(ii) the amount of propylene homo- or copolymer fraction (A1) is from more than 45 wt.% to 95 wt.% based on the total amount of all propylene homo- and/ or copolymer fractions present in the matrix (A);

(iii) the amount of propylene homo- or copolymer fraction (A2) is from 5 wt.% to less than 15 wt.% based on the total amount of all propylene homo- and/or copolymer fractions present in the matrix (A); and

(iv) the soluble fraction (SF) according to CRYSTEX QC of the heterophasic propylene copolymer composition comprises more than 18.0 wt.% of the total heterophasic propylene copolymer composition (HECO).

The combination of features (i) to (iv) gives rise to compositions having improved stiffness/ impact balance compared to other heterophasic propylene copolymer compositions.

It is pointed out that a HECO, wherein the SF according to CRYSTEX QC ANALYSES comprises more than 18.0 wt.% of the HECO, likewise meets the following requirement: a xylene cold soluble fraction (XCS) of the heterophasic propylene copolymer composition comprises more than 18 wt.% of the total heterophasic propylene copolymer composition (HECO).

In a first embodiment of the present invention, the heterophasic propylene copolymer composition is free of phthalic compounds as well as their respective decomposition products. According to the present invention, the term "phthalic compounds" refers to phthalic acid (CAS No. 88-99-3), its mono- and diesters with aliphathic, alicyclic and aromatic alcohols, as well as phthalic anhydride.

The present invention further relates to a multistage polymerization process comprising at least three subsequent polymerization steps, in the presence of:

a) a Ziegler-Natta catalyst comprising compounds (TC) of a transition metal of Group 4 to 6 of IUPAC, a Group 2 metal compound and an internal donor, wherein said internal donor is a non-phthalic compound, preferably a non-phthalic acid ester; being selected from the group comprising malonates, maleates, succinates, citraconates, glutarates, cyclohexene-1,2-dicarboxylates and benzoates, and any derivatives and/or mixtures thereof;

b) a co-catalyst (Co);

c) an external donor (ED), wherein said external donor is preferably dicyclopentyl dimethoxy silane; and

d) optionally, a nucleating agent, preferably a polymeric nucleating agent, more preferably polyvinylcyclohexane.

In a further aspect, the invention relates to a heterophasic propylene copolymer composition obtainable by a multistage polymerization process as detailed above.

Finally, the invention also relates to the use of a heterophasic propylene copolymer composition as specified above, or obtainable by a multistage polymerization process as described above, for packaging applications, preferably for low temperature packaging applications.

## Detailed description

In the following, the individual components are defined in more detail.

The particular heterophasic propylene copolymer composition of the present invention comprises, or consists of, at least

(a) the matrix (A) comprising a propylene homo- or copolymer, said propylene homo- or copolymer comprises at least two propylene homo- and/or copolymer fractions, propylene homo- or copolymer fraction (A1) and propylene homo- or copolymer fraction (A2); and

(b) the elastomeric propylene copolymer (B) dispersed in said matrix (A); as defined below in more detail.

The term "heterophasic propylene copolymer composition" used herein denotes compositions consisting of a polypropylene matrix resin, an elastomeric propylene copolymer dispersed in said matrix and, optionally, a nucleating agent.

In the present invention the term "matrix" is to be interpreted in its commonly accepted meaning, i.e. it refers to a continuous phase (in the context of the present invention a continuous polymer phase) wherein isolated or discrete particles such as elastomer/ rubber particles may be dispersed. The propylene homo- or copolymer is present at least in an amount sufficient to form a continuous phase which can act as a matrix.

## Matrix (A)

As indicated above, the matrix (A) comprises a propylene homo- or copolymer, which comprises, or consists of, at least two propylene homo- and/or copolymer fractions, propylene homo- or copolymer fraction (A1) and propylene homo- or copolymer fraction (A2).

Thus, the matrix (A) is multimodal, preferably bi- or trimodal, more preferably the matrix (A) is trimodal.

The terms "multimodal", "bimodal" and "trimodal" describe probability distributions having several relative maxima. In particular, the expression "modality of a polymer" refers to the shape of its molecular weight distribution (MWD) curve, that is the appearance of the graph of the polymer weight fraction as a function of the molecular weight. If the polymer is produced in a multistage process comprising several sequential steps, i.e. by utilizing reactors coupled in serial configuration, and using different conditions in each reactor, the different polymer fractions produced in the different reactors have each their own molecular weight distribution which may considerably differ from one another. The molecular weight distribution curve of the resulting final polymer can be seen as super-imposing of molecular weight distribution curves of the individual polymer fractions which will, accordingly, show distinct maxima, or at least be distinctively broadened compared with the curves for individual fractions. A polymer showing such molecular weight distribution curve is called bimodal, trimodal or multimodal, respectively.

Propylene homo- or copolymer fraction (A1) has a melt flow rate MFR2 (230°C) measured according to ISO 1133 of from 250 g/10min to 600 g/10min, preferably from 300 g/10min to 600 g/10min, more preferably of from more than 300 g/10m in to 600 g/10min.

The amount of propylene homo- or copolymer fraction (A1) is from 45 wt.% to 95 wt.%, preferably from 48 wt.% to 95 wt.%, based on the total amount of all propylene homo- and/ or copolymer fractions present in the matrix (A).

In an embodiment, fraction (A1) is a propylene homopolymer. The term homopolymer used in the instant invention relates to a polypropylene that consists essentially, i.e. of at least 99 wt.%, preferably of at least 99.5 wt.%, more preferably of at least 99.7 wt.% of propylene units. In a preferred embodiment only propylene units are detectable in the propylene homopolymer fraction (A1).

Propylene homo- or copolymer fraction (A2) has a melt flow rate MFR2 (230°C) measured according to ISO 1133 in the range of from 0.5 to 25 g/10 min, preferably in the range of from 1 to 20 g/10min, more preferably in the range of from more than 2 to 15 g/ 10min.

The amount of propylene homo- or copolymer (A2) is from 5 wt.% to less than 15 wt.%, preferably from 7.0 wt.% to 12.5 wt.%, based on the total amount of all propylene homo- and/or copolymer fractions present in the matrix (A).

In an embodiment, fraction (A2) is a propylene homopolymer, i.e. comprises at least 99 wt.%, preferably of at least 99.5 wt.%, more preferably of at least 99.7 wt.% of propylene units.

Optionally, the matrix (A) further comprises a propylene homo- or copolymer fraction (A3) having a melt flow rate MFR2 (230°C) measured according to ISO 1133 in the range of from 250 to 500 g/ 10m in, preferably of from 275 to 450 g/10min.

The amount of propylene homo- or copolymer fraction (A3) is from 0 wt.% to 45 wt.%, preferably from 20 wt.% to 45 wt.% based on the total amount of all propylene homo- and/ or copolymer fractions present in the matrix (A).

In an embodiment, fraction (A3) is present in the matrix (A) and is a propylene homopolymer, i.e. only propylene units are detectable in the propylene homopolymer fraction (A3).

The propylene homo- or copolymer constituting the matrix (A) may be produced by a multistage polymerization process. The polymerization process involving the polymerization of propylene and, optionally, a comonomer, via bulk polymerization, gas phase polymerization, solution polymerization or combinations thereof, using conventional non-phthalate catalysts. A homo- or copolymer can be made either in loop reactors or in a combination of loop and gas phase reactors; the respective polymerization processes being well known in the art.

The matrix (A) comprising propylene homo- or copolymer has a melt flow rate MFR2 (230°C) measured according to ISO 1133 in the range of from 150 to 600 g/10min, preferably of from 200 to 500 g/10min. The MFR2 of the matrix (A) is indicated as $MFR_{(A)}$.

Suitable comonomers optionally comprised in the propylene homo- or copolymer fractions making up the matrix (A) are selected from ethylene and/ or alpha-olefins having 4 to 10 carbon atoms; preferably the comonomer is ethylene.

The total content of comonomer, preferably ethylene, in the matrix (A), that is the content of comonomer, preferably ethylene, in all of the separate homo- or copolymer fractions taken together, is from 0.0 wt.% to 1.0 wt%.

**Elastomeric propylene copolymer (B)**

The elastomeric propylene copolymer (B), which forms a dispersed phase within the matrix (A), is a copolymer of propylene and ethylene and/ or an alpha-olefin monomer having from 4 to 10 carbon atoms. Preferably, the elastomeric propylene copolymer (B) is a copolymer of propylene and ethylene.

The elastomeric propylene copolymer (B) is present in the heterophasic propylene copolymer composition in an amount of from 5.0 to 40.0 wt.%, preferably from 10.0 to 30.0 wt.%, more preferably from 15.0 to 25.0 wt.% and most preferably from 17.5 to 22.5 wt.% based on the combined weight of matrix (A) and elastomeric propylene copolymer (B) in the heterophasic propylene copolymer composition.

The elastomeric propylene copolymer (B) has a total comonomer content, preferably ethylene content, in the range of from 10 to 45 wt.%, preferably in the range of from 15 to 40 wt.% and more preferably in the range of 20 to 35 wt.%.

The elastomeric propylene copolymer (B) may be unimodal or bimodal, preferably unimodal.

Preferably, the unimodal dispersed phase is made in one reaction stage, more preferably in a gas phase reactor and comprises, respectively consists of, one propylene copolymer fraction.

**Nucleating agent**

The propylene polymer composition of the instant invention may further comprise a nucleating agent, preferably a polymeric nucleating agent.

According to an embodiment, the polymeric nucleating agent is an alpha-nucleating agent, preferably a polymeric alpha-nucleating agent, such as vinylcyclohexane polymer and/ or vinylalkane polymer.

Said polymeric nucleating agent may be added to the composition by blending with a masterbatch together with a carrier polymer or during polymerization of the heterophasic propylene copolymer (HECO), preferably, the polymeric nucleating agent is introduced into the composition by prepolymerizing the catalyst used to prepare a part or all of the heterophasic propylene copolymer (HECO).

A preferred polymeric nucleating agent is a vinyl polymer such as a vinyl polymer derived from monomers of the formula

$$CH_2=CH-CHR^1R^2$$

wherein $R^1$ and $R^2$, independently represent a linear or branched $C_4$-$C_{30}$ alkane, $C_4$-$C_{20}$ cycloalkane or $C_4$-$C_{20}$ aromatic ring. Preferably $R^1$ and $R^2$, together with the carbon atom to which they are attached form a five- or six-membered saturated, unsaturated or aromatic ring or independently represent a lower alkyl group comprising from 1 to 4 carbon atoms. Preferred vinyl compounds for the preparation of a polymeric nucleating agent to be used in accordance with the present invention are vinyl cycloalkanes, in particular vinyl cyclohexane (VCH), vinyl cyclopentane, vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer for forming the polymeric nucleating agent.

Preferably the polymeric nucleating agent is vinylcyclohexane (VCH) polymer which is introduced into the heterophasic propylene copolymer (HECO) by the BNT technology.

With regard to BNT technology, reference is made to WO 99/ 24478, WO 99/ 24479 and particularly WO 00/ 68315.More preferably in this embodiment, the amount of polymeric nucleating agent in the heterophasic propylene copolymer is in the range of from 0 to 500 ppm, preferably in the range of from 1 to 200 ppm, most preferably in the range of from 5 to 100 ppm, based on the heterophasic propylene copolymer and the nucleating agent, preferably based on the heterophasic propylene copolymer composition including all additives.

**Heterophasic propylene copolymer composition**

In addition to the above, the heterophasic propylene copolymer composition of the instant invention is characterized by various special features indicated below.

The heterophasic propylene copolymer composition (HECO) has a total melt flow rate (MFR2) measured according to ISO 1133 of at least 50 g/10min, preferably in a range of from 50 to 600 g/10min, more preferably in a range of from 55 to 300 g/10min. A total melt flow rate (MFR2) in the indicated ranges assures high flowabiltiy of the material and its processability in injection moulding.

The total melt flow rate of the HECO is adjusted during the polymerization process. In other words, the total melt flow rate of the HECO results from tuning the polymerization process. Accordingly, the HECO of the instant invention is not subjected to any post-treatments in order to achieve the desired total melt flow rate (MFR2). Specifically, according to a preferred embodiment, the heterophasic propylene copolymer composition is non-visbroken, particularly not visbroken using peroxide. Thus, it is preferred that the heterophasic propylene copolymer composition does not contain any peroxide and/ or decomposition products thereof.

Suitable comonomers to be included in the heterophasic propylene copolymer composition of the invention are selected form ethylene and alpha-olefins comprising from 4 to 10 carbon atoms; ethylene being preferred.

The total content of comonomers, preferably ethylene, in the heterophasic propylene copolymer compositions is in the range of from 3.0 to 20.0 wt.%, preferably in the range of from 5.0 to 15.0 wt.%, more preferably in the range of from 6.0 to 10.0 wt.%.

The soluble fraction (SF) of the heterophasic propylene copolymer composition (HECO) measured by CRYSTEX QC method ISO 6427-B is in the range of from 18.0 wt.% to 35.0 w.%, preferably in the range of from 19.0 to 30.0 wt.%, more preferably in the range of from 20.0 to 25.0 wt.%.

The soluble fraction (SF) of the heterophasic propylene copolymer composition is further defined by its intrinsic viscosity (IV). For the instant invention, the soluble fraction of the heterophasic propylene copolymer composition has an intrinsic viscosity measured by CRYSTEX QC ANALYSES in the range of from 2.0 to 5.0 dl/g, preferably in the range of from 2.3 to 3.0 dl/g.

Additionally, it is preferred that the comonomer content, preferably ethylene content, of the soluble fraction of the heterophasic propylene copolymer composition is in the range of from 20.0 to 40.0 wt.%, preferably from 25.0 to 35.0 wt.%, more preferably from 27.0 to 31.0 wt.% determined by Infrared Spectroscopy during CRYSTEX QC analyses.

The comonomers present in the soluble fraction are those defined above; preferably the comonomer is ethylene only.

According to a preferred embodiment of the invention, the heterophasic propylene copolymer composition meets the following requirement:

$$SF * IV > 50,$$

wherein SF is the amount of soluble fraction in wt.% and IV is the intrinsic viscosity of the soluble fraction in dl/g.

The heterophasic propylene copolymer composition of the invention is furthermore characterized by a hexane solubles (C6-solubles) fraction according to FDA in the range of from 0.0 to 5.5 wt.%, preferably from 0.0 to 5.0 wt.%, more preferably from 0.0 to 4.5 wt.% and most preferably from 0.0 to 4.0 wt.%,determined according to FDA, HHS 177.1520.

Importantly, the heterophasic propylene copolymer composition of the instant invention is characterized by its specific molecular distribution profile. The molecular distribution profile is determined by Cross Fractionation Chromatography (a-TREF x SEC) running with method "HIPP-cap".

Since the matrix (A) makes up the main component present in the heterophasic propylene copolymer composition (HECO) of the invention, the special matrix design is reflected in Cross Fractionation Chromatography (CFC) analyses; specifically, the appearance of a relatively high amount of low molecular weight material with a low crystalline sequence length ($\log_{M<3.5}$; of the fraction eluting at a temperature < 80°C) and a relatively high amount of material with high molecular weight and high isotacticity length ($\log_{M>5.5}$ of the fraction eluting at temperatures between 122°C and 130°C). This is particularly remarkable since the total flowability of the heterophasic propylene copolymer composition is high (MFR2 > 50). The presence of high and low molecular weight fractions in the matrix, and subsequently in the heterophasic propylene copolymer composition, leads to the specific and very good combination of high stiffness, high notched Charpy impact strength at room temperature and low temperatures and a ductile failure at room temperature in puncture tests.

According to a preferred embodiment, a relative fraction $\log_{M<3.5}$, which elutes at T < 80°C, as determined using cross fractionation chromatography (CFC) makes up from 2.5 wt.% to 5.0 wt.%, preferably from 2.8 to 4.5 wt.%, more preferably from 3.2 to 4.0 wt.% based on the total weight of the heterophasic propylene copolymer composition.

Moreover, it is preferred that a relative fraction $\log_{M>5.5}$, which elutes at 122°C < T < 130°C, as determined using cross fractionation chromatography (CFC) makes up from 10.0 wt.% to 12.0 wt.%, preferably from 10.3 to 11.5 wt.% based on the total weight of the heterophasic propylene copolymer composition.

According to an especially preferred embodiment of the present invention, the heterophasic propylene copolymer composition meets the following requirement:

$$(\text{relative fraction } \log_{M<3.5,\ \text{which elutes at } T<80°C}) * (\text{relative fraction } \log_{M>5.5,\ \text{which elutes at } 122°C<T<130°C}) * \text{MFR2}_{HECO} > 2000,$$

with $\text{MFR2}_{HECO}$ being the MFR2 of the total heterophasic propylene copolymer composition determined according to ISO 1133-1 at 230°C and a load of 2.16 kg.

The Charpy notched impact strength of the heterophasic propylene copolymer composition (HECO) at +23°C (NIS 23°C) as measured according to ISO 179-2/1eA is in the range of from 6.0 to 10.0 kJ/m$^2$, preferably from 7.0 to 9.0 kJ/m$^2$.

The Charpy notched impact strength of the heterophasic propylene copolymer composition (HECO) at -20°C (NIS -20°C) as measured according to ISO 179-2/1eA is in the range of from 3.5 to 6.0 kJ/m$^2$, preferably from 4.0 to 6.0 kJ/m$^2$, and more preferably from 4.3 to 5.5 kJ/m$^2$.

The heterophasic propylene copolymer composition (HECO) of the invention has a tensile modulus (E) in the range of from 1300 to 1600 MPa determined according to ISO 527-1 at 23°C on injection moulded ISO 1B specimens ($170{\times}10{\times}4mm$) prepared in accordance with EN ISO 19069-2.

In a particularly preferred embodiment, the heterophasic propylene copolymer composition of the present invention further meets the following requirement:

$$E * \text{MFR2}_{HECO} * \text{NIS}_{23°C} > 700000,$$

with E being the tensile modulus determined according to ISO 527-1 at 23°C, $\text{MFR2}_{HECO}$ being the MFR2 of the total heterophasic propylene copolymer composition determined according to ISO 1133-1 at 230°C and a load of 2.16 kg, and $\text{NIS}_{23°C}$ being the Charpy Notched Impact Strength of the heterophasic propylene copolymer composition as determined according to ISO 179-2 1eA at 23°C.

The heterophasic propylene copolymer composition may preferably exhibit a puncture energy, determined according to the instrumented falling weight test according to ISO 6603-2 at 23 °C as described herein, in a range of from at least 10.0 J to 50.0 J.

The heterophasic propylene copolymer composition may preferably exhibit a puncture energy, determined according to the instrumented falling weight test according to ISO 6603-2 at -20 °C as described herein, in a range of from at least 5.0 J to 30.0 J.

Moreover, the heterophasic propylene copolymer composition of the present invention preferably behave in a ductile manner when subjected to the instrumented falling weight test according to ISO 6603-2 at 23°C. The impact failure evaluated according to ISO6603-2 should be better than YU.

In addition to the above, it is pointed out that the heterophasic propylene copolymer composition of the present invention may further comprise additives conventionally used in the field.

Preferably the heterophasic propylene copolymer composition of the present invention does not comprise any phthalate compounds or derivatives thereof; specifically, the heterophasic propylene copolymer composition of the present invention is free of phthalic acid esters, as well as any decomposition products thereof.

**Preparation of the HECO**

The heterophasic propylene copolymer composition (HECO) of the present invention may be prepared by any suitable process, including in particular blending processes such as mechanical blending including mixing and melt blending processes and any combinations thereof, as well as in-situ blending during the polymerization process. These can be carried out by methods known to the skilled person, including batch processes and continuous processes.

The heterophasic propylene copolymer (HECO) according to the invention is preferably prepared by a sequential polymerization process, as described in detail in WO2017/ 148970 A1 or EP 3 015 504 A1, in the presence of a catalyst system comprising a Ziegler-Natta Catalyst (ZN-C), a cocatalyst (Co) and an external donor (ED), as described in the above cited earlier applications.

Specifically, the heterophasic propylene copolymer (HECO) is preferably produced in a process comprising the following steps under the conditions set out above:

a) In a (optional) pre-polymerization, a mixture (MI) of the Ziegler-Natta catalyst (ZN-C) and the polypropylene (Pre-PP) produced in the pre-polymerization reactor (PR) is obtained.

Preferably the Ziegler-Natta catalyst (ZN-C) is (finely) dispersed in the polypropylene (Pre-PP). Subsequent to the pre-polymerization, the mixture of the Ziegler-Natta catalyst (ZN-C) and the polypropylene (Pre-PP) produced in the pre-polymerization reactor (PR) is transferred to the first reactor (R1). Typically the total amount of the polypropylene (Pre-PP) in the final heterophasic propylene copolymer (HECO) is rather low and typically not more than 5.0 wt.%, more preferably not more than 4.0 wt.%, still more preferably in the range of from 0.5 to 4.0 wt.%, like in the range of from 1.0 to 3.0 wt.%.

b) In the first polymerization reactor (R1), i.e. in a loop reactor (LR), propylene is polymerized obtaining a first propylene homo- or copolymer fraction (A1) of the propylene homo- or copolymer matrix (A), transferring said first propylene homopolymer fraction (A1) to a second polymerization reactor (R2),

c) In the second polymerization reactor (R2) propylene is polymerized in the presence of the first propylene homo- or copolymer fraction (A1) obtaining a second propylene homo- or copolymer fraction (A2) of the propylene homopolymer.

d) Optionally, a further polymerization reactor is present between the first polymerization reactor (R1), i.e. the loop reactor (LR), and the second polymerization reactor (R2). Said further polymerization reactor being a gas phase reactor, wherein an optional further propylene homo- or copolymer fraction (A3) is obtained. Said optional further propylene homo- or copolymer fraction (A3) may be identical to or different from (A1).

e) Said fraction [A1+A2+optionally A3] is further transferred to a third polymerization reactor R3 obtaining an elastomeric propylene copolymer fraction (B) in the presence of all fractions produced in earlier steps.

Thus, the nucleated polymer produced may comprise the following fractions:

- the (optional) polypropylene (Pre-PP) produced in the pre-polymerization reactor (PR),

- a first propylene homo- or copolymer fraction (A1),

- an optional further propylene homo- or copolymer fraction (A3),

- a second propylene homo- or copolymer fraction (A2),

- and

- an elastomeric propylene copolymer fraction (B).

By using - as stated above - a loop reactor and at least two gas phase reactors in serial configuration and working at different conditions, a multimodal (e.g. bimodal or trimodal) propylene homo- or copolymer matrix (A) can be obtained.

If the loop reactor and the optional further gas phase reactor are run under conditions yielding similar polymers, a first unimodal homo- or copolymer fraction (A1) being comprised in the matrix (A) can be obtained rather than two distinguishable fractions (A1) and (A3).

A preferred multistage process is a "loop-gas phase"-process, as developed by Borealis (known as BORSTAR® technology) and is described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripole process of Basell.

The catalyst components are preferably all introduced to the prepolymerization step, if applicable.

However, where the solid catalyst component (i) and the cocatalyst (ii) can be fed separately it is possible that only a part of the cocatalyst is introduced into the (optional) prepolymerization stage and the remaining part into subsequent polymerization stages. Also in such cases it is necessary to introduce enough cocatalyst into the prepolymerization stage to obtain a sufficient polymerization reaction therein.

## Use of the HECO

The heterophasic propylene copolymer composition according to the invention can be used in various application fields, due to its improved stiffness/impact balance.

Thus, according to a further embodiment of the invention the heterophasic propylene copolymer (HECO) of the invention is used for the production of films, extruded, blow moulded or injection moulded articles, such as pouches and bags, pipes and fittings, transport packaging containers as well as components for car exteriors and interiors, like dashboards, door claddings, consoles, bumpers and trims.

Preferably, the heterophasic propylene copolymer composition according to the invention is used for packaging applications, more preferably for low temperature packaging applications.

Low temperature packaging applications are herein defined as packaging applications being subjected to a temperature of 0°C or less. Examples of low temperature packaging applications include deep freeze or refrigerator uses.

The present invention provides the specific advantage that articles may be produced with lower wall thicknesses without expense in the flowability of the polypropylene compositions and still having excellent impact properties. Furthermore the stiffness/impact balance of the articles produced with the heterophasic propylene copolymer (HECO) of the present invention is excellent.

The propylene copolymer composition is suitable for use in any common conversion process suitable for thermoplastic polymers like injection moulding, extrusion blow moulding, injection stretch blow moulding or cast film extrusion.

Unless explicitly described otherwise, the description of the present invention is to be understood so that one or more of any of the above described preferred embodiments of the invention can be combined with the invention described in its most general features.

In the following, the measurement and determination methods for the parameters as used herein are given and the present invention is further illustrated by way of inventive example and comparative example.

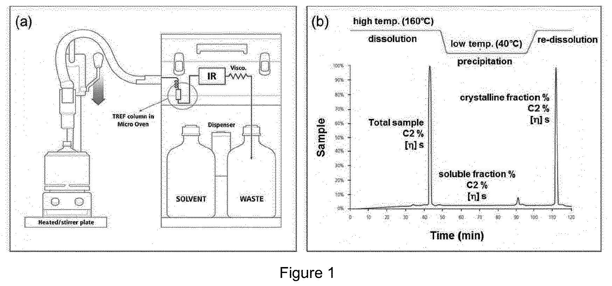

Figure 1 depicts (a) A schematic diagram of the CRYSTEX QC instrument (b) Elution of the EP copolymer sample and obtained soluble and crystalline fractions in the TREF column (column filled with inert material e.g. glass beads) (see Del Hierro, P.; Ortin, A.; Monrabal, B.; 'Soluble Fraction Analysis in polypropylene, The Column Advanstar Publications, February 2014. Pages 18-23).

## EXPERIMENTAL PART

### A. Measuring methods

The following definitions of terms and determination methods apply for the above general description of the invention as well as to the below examples unless otherwise indicated.

### Xylene Cold Soluble (XCS)

Xylene Cold Soluble fraction at room temperature (XCS, wt.-%) is determined at 25 °C according to ISO 16152; 5th edition; 2005-07-01.

**Method description CRYSTEX-QC**

**Crystalline and soluble fractions and their respective properties**

The crystalline (CF) and soluble fractions (SF) of the polypropylene (PP) compositions as well as the comonomer content and intrinsic viscosities of the respective fractions were analyzed by use of the CRYSTEX QC instrument, Polymer Char (Valencia, Spain).

A schematic representation of the CRYSTEX QC instrument is shown in Figure 1a. The crystalline and amorphous fractions are separated through temperature cycles of dissolution at 160°C, crystallization at 40°C and redissolution in 1,2,4-trichlorobenzene at 160°C as shown in Figure 1b. Quantification of SF and CF and determination of ethylene content (C2) are achieved by means of an integrated infrared detector (IR4) and for the determination of the intrinsic viscosity (IV) an online 2-capillary viscometer is used.

IR4 detector is multiple wavelength detector measuring IR absorbance at two different bands ($CH_3$ stretching vibration (centred at app. 2960 $cm^{-1}$) and the CH stretching vibration (2700-3000 $cm^{-1}$) that are serving for the determination of the concentration and the Ethylene content in Ethylene-Propylene copolymers. IR4 detector is calibrated with series of 8 EP copolymers with known Ethylene content in the range of 2 wt.-% to 69 wt.-% (determined by 13C-NMR) and each at various concentrations, in the range of 2 and 13mg/ml. To encounter for both features, concentration and ethylene content at the same time for various polymer concentrations expected during Crystex QC analyses the following calibration equations were applied:

$$Conc = a + b*Abs(CH) + c*(Abs(CH))^2 + d*Abs(CH_3) + e*(Abs(CH_3))^2 + f*Abs(CH)*Abs(CH_3)$$

$$(Equation\ 1)$$

$$CH_3/1000C = a + b*Abs(CH) + c*Abs(CH_3) + d*(Abs(CH_3)/Abs(CH)) + e*(Abs(CH_3)/Abs(CH))^2$$

$$(Equation\ 2)$$

The constants a to f for equation 1 and a to e for equation 2 were determined by using least square regression analysis.

The $CH_3/1000C$ is converted to the ethylene content in wt.-% using following relationship:

$$wt.\text{-}\%\ (Ethylene\ in\ EP\ Copolymers) = 100 - CH_3/1000C * 0.3 \qquad (Equation\ 3)$$

Amount of Soluble fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear:

$$wt.\text{-}\%\ XS = 1,01* wt.\text{-}\%\ SF \qquad (Equation\ 4)$$

Intrinsic viscosity (IV) of the parent EP copolymer and its soluble and crystalline fractions are determined with a use of an online 2-capillary viscometer and are correlated to corresponding IV's determined by standard method in decalin according to ISO 1628-3. Calibration is achieved with various EP PP copolymers with IV = 2-4 dL/g. The determined calibration curve is linear:

$$IV\ (dL/g) = a* Vsp/c \qquad (Equation\ 5)$$

A sample of the PP composition to be analyzed is weighed out in concentrations of 10mg/ml to 20mg/ml. After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 400rpm. To avoid sample degradation, polymer solution is blanketed with the $N_2$ atmosphere during dissolution.

As shown in a Figure 1a and b, a defined volume of the sample solution is injected into the column filled with inert support where the crystallization of the sample and separation of the soluble fraction from the crystalline part is taking place. This process is repeated two times. During the first injection the whole sample is measured at high temperature, determining the IV[dl/g] and the C2[wt.%] of the PP composition. During the second injection the soluble fraction (at low temperature) and the crystalline fraction (at high temperature) with the crystallization cycle are measured (wt.-% SF, wt.-% C2, IV).

**Cross Fractionation Chromatography (a-TREF x SEC)**

The chemical composition distribution as well as the determination of the molecular weight distribution and the corresponded molecular weight averages (Mn, Mw and Mv) at a certain elution temperature (polymer crystallinity in solution) were determined by a full automated Cross Fractionation Chromatography (CFC) as described by Ortin A., Monrabal B., Sancho-Tello J., Macromol. Symp., 2007, 257, 13-28.

A CFC instrument (PolymerChar, Valencia, Spain) was used to perform the cross-fractionation chromatography (TREF x SEC). A four band IR5 infrared detector (PolymerChar, Valencia, Spain) was used to monitor the concentration. The polymer was dissolved at 160°C for 150 minutes at a concentration of around 1mg/ml.

Once the sample was completely dissolved an aliquot of 0.5 ml was loaded into the TREF column and stabilized for a while at 110 °C. The polymer was crystallized and precipitate to a temperature of 30°C by applying a constant cooling rate of 0.2 °C/min. A discontinuous elution process is performed using the following temperature steps: (30, 40, 50, 60, 65, 70, 75, 80, 85, 90, 95, 100, 103, 106, 109, 112, 115, 117, 119, 121, 123, 125, 127, 130, 135 and 140).

In the second dimension, the GPC analysis, 3 PL Olexis columns and 1x Olexis Guard columns from Agilent (Church Stretton, UK) were used as stationary phase. As eluent 1,2,4-trichlorobenzene (TCB, stabilized with 250 mg/L 2,6-Di tert.-butyl-4-methyl-phenol) at 150 °C and a constant flow rate of 1 mL/min were applied. The column set was calibrated using universal calibration (according to ISO 16014-2:2003) with at least 15 narrow MWD polystyrene (PS) standards in the range of 0.5 kg/mol to 11 500 kg/mol. Following Mark Houwink constants were used to convert PS molecular weights into the PP molecular weight equivalents.

$$K_{PS} = 19 \times 10^{-3} \text{ mL/g,} \quad \alpha_{PS} = 0.655$$

$$K_{PP} = 19 \times 10^{-3} \text{ mL/g,} \quad \alpha_{PP} = 0.725$$

A third order polynomial fit was used to fit the calibration data. Data processing was performed using the software provided from PolymerChar with the CFC instrument.

**Calculation of the relative fraction at certain molecular weight and elution temperature areas of iso-PP in wt.-%.**

To calculate the relative fraction at certain molecular weight and elution temperature areas of iso-PP in wt.-% in the first step the amount of iso-PP in wt.-% from the CFC contour plot needs to be calculated.

$$\text{Iso PP in wt.-\%} = 100 - SF - PE \text{ fraction in wt.-\%} \qquad \text{(Equation 6)}$$

Where the SF is the soluble fraction in TCB at 35°C obtained by CFC analysis and the PE fraction is calculated from the CFC result using the following approach:

$$PE_{Fraction} = \frac{\sum_{i=3}^{105} \sum_{j=3.8}^{8} H_{ij}}{\sum_{i=30}^{140} \sum_{j=2}^{8} H_{ij}} * 100 \qquad \text{(Equation 7)}$$

Where $H_{ij}$ is the 2D differential distribution at the corresponded elution temperature (Tel) i and the logM value j, obtained with the corresponded data processing software.

With amount of the iso-PP in wt.-% the following relative polymer fraction can be calculated straight forward.

$$rel\ Fraction_{logM>\ ,\ Tel>115°C} = \frac{\frac{\Sigma_{i=115}^{140}\Sigma_{j=6}^{8}H_{ij}}{\Sigma_{i=30}^{140}\Sigma_{j=2}^{8}H_{ij}}*10}{isoPP} \qquad \text{(Equation 8)}$$

$$rel\ Fraction_{logM>\ .5,130°C>Tel>122°C} = \frac{\frac{\Sigma_{i=122}^{130}\Sigma_{j=5.5}^{8}H_{ij}}{\Sigma_{i=30}^{140}\Sigma_{j=2}^{8}H_{ij}}*100}{isoPP} \qquad \text{(Equation 9)}$$

$$rel\ Fraction_{logM<\ .5,Tel<\ °C} = \frac{\frac{\Sigma_{i=30}^{80}\Sigma_{j=2}^{3.5}H_{ij}}{\Sigma_{i=30}^{140}\Sigma_{j=2}^{8}H_{ij}}*100}{isoPP} \qquad \text{(Equation 10)}$$

**DSC analysis, melting temperature ($T_m$), melting enthalpy ($H_m$), crystallization temperature ($T_c$) and crystallization enthalpy ($H_c$)**

Measured with a TA Instrument Q200 differential scanning calorimetry (DSC) on 5 to 7 mg samples. DSC is run according to ISO 11357 / part 3 /method C2 in a heat / cool / heat cycle with a scan rate of 10°C/min in the temperature range of -30 to +225°C. Crystallization temperature ($T_c$) and crystallization enthalpy ($H_c$) are determined from the cooling step, while melting temperature ($T_m$) and melting enthalpy ($H_m$) are determined from the second heating step respectively from the first heating step in case of the webs.

**Glass transition temperature (Tg)**

The glass transition temperature Tg is determined by dynamic mechanical thermal analysis according to ISO 6721-7. The measurements are done in torsion mode on compression moulded samples ($40 \times 10 \times 1\ mm^3$) between -130 °C and +150 °C with a heating rate of 2 °C/min and a frequency of 1 Hz.

Storage modulus G' is determined at +23 °C according ISO 6721-7:1996. The measurements are done in torsion mode on compression moulded samples ($40 \times 10 \times 1\ mm^3$) between -130 °C and +150 °C with a heating rate of 2 °C/min and a frequency of 1 Hz.

**Heat deflection temperature (HDT)**

HDT is measured according to ISO 75-2, method B at 0.45 MPa.

**Melt flow rate ($MFR_2$)**

$MFR_2$ (230 °C) is measured according to ISO 1133 (230 °C, 2.16 kg load) The melt flow rate is measured as the $MFR_2$ in accordance with ISO 1133-1 (230 °C, 2.16 kg load) for polypropylene and in accordance with ISO 1133 (190 °C, 2.16 kg load) for polyethylene and is indicated in g/10 min. The MFR is an indication of the flowability, and hence the processability, of the polymer. The higher the melt flow rate, the lower the viscosity of the polymer.

The $MFR_2$ of a fraction (A2) produced in the presence of a fraction (A1) is calculated using the measured values of $MFR_2$ of fraction (A1) and the mixture received after producing fraction (A) ("final"):

$$MFR_{A2} = 10^{\wedge}[(log(MFR_A)-weight\ fraction_{A1}*log(MFR_{A1})/(1-weight\ fraction_{A1})]$$

**Charpy notched impact strength (NIS)**

The Charpy notched impact strength (NIS) was measured according to ISO 179 1eA at +23 °C or -20 °C, using injection moulded bar test specimens of $80 \times 10 \times 4\ mm^3$ prepared in accordance with EN ISO 19069-2.

**Tensile Modulus (E)**

**Tensile Modulus, tensile strength and tensile strength at break** were determined according to ISO 527-2 (cross head speed = 1 mm/min; test speed 50 mm/min at 23 °C) on an ISO 1B specimen.

**Biaxial impact performance/ puncture tests**

Instrumented falling weight test in accordance with ISO 6603-2 were done on 60x60x1 or 60x60x2 mm specimen respectively, to determine puncture energy and energy to max force. The specimen were prepared according to ISO 293-3.

The test was performed at either 23 °C or -20 °C (as indicated) with a lubricated tip with a diameter of 20 mm and impact velocity of 4.4 mm/s. Six specimens were tested for each sample and the resulting six force-deflection curves were used to calculate the mean value for energy to maximum force and puncture energy

In addition, the impact failure was evaluated according to ISO 6603-2 to see if the materials are behaving in a ductile or brittle manner.

ISO6603-2 defines the following impact failure types:

YD yielding (zero slope at maximum force) followed by deep drawing (1);

YS yielding (zero slope at maximum force) followed by (at least partially) stable cracking (2);

YU yielding (zero slope at maximum force) followed by unstable cracking (3);

NY no yielding (4).

The number in brackets was assigned to the impact failure to calculate a numeric IPT failure mode for impact failure (mean value derived from six tested samples).

**Hexane solubles fraction (C6-solubles acc. FDA)**

The content of hexane solubles is determined according to FDA, HHS 177.1520.

**B. EXAMPLES**

**Inventive examples (IE1 and IE2)**

The catalyst used in the polymerization process for the heterophasic polypropylene composition of the inventive examples was prepared as follows:

**Used chemicals:**

20 % solution in toluene of butyl ethyl magnesium (Mg(Bu)(Et), BEM), provided by Chemtura

2-Ethylhexanol, provided by Amphochem

3-Butoxy-2-propanol - (DOWANOL™ PnB), provided by Dow

Bis(2-ethylhexyl)citraconate, provided by SynphaBase

$TiCl_4$, provided by Millenium Chemicals

Toluene, provided by Aspokem

Viscoplex® 1-254, provided by Evonik

Heptane, provided by Chevron

**Preparation of a Mg alkoxy compound**

Mg alkoxide solution was prepared by adding, with stirring (70 rpm), into 11 kg of a 20 wt-% solution in toluene of butyl ethyl magnesium (Mg(Bu)(Et)), a mixture of 4.7 kg of 2-ethylhexanol and 1.2 kg of butoxypropanol in a 20 l stainless steel reactor. During the addition the reactor contents were maintained below 45°C. After addition was completed, mixing (70 rpm) of the reaction mixture was continued at 60°C for 30 minutes. After cooling to room temperature 2.3 kg of the donor bis(2-ethylhexyl)citraconate was added to the Mg-alkoxide solution keeping temperature below 25°C. Mixing was continued for 15 minutes under stirring (70 rpm).

**Preparation of solid catalyst component**

20.3 kg of $TiCl_4$ and 1.1 kg of toluene were added into a 20 l stainless steel reactor. Under 350 rpm mixing and keeping the temperature at 0 °C, 14.5 kg of the Mg alkoxy compound prepared in example 1 was added during 1.5 hours. 1.7 l of Viscoplex® 1-254 and 7.5 kg of heptane were added and after 1 hour mixing at 0°C the temperature of the formed emulsion was raised to 90°C within 1 hour. After 30 minutes mixing was stopped catalyst droplets were solidified and the formed catalyst particles were allowed to settle. After settling (1 hour), the supernatant liquid was siphoned away. Then the catalyst particles were washed with 45 kg of toluene at 90°C for 20 minutes followed by two heptane washes (30 kg, 15 min). During the first heptane wash the temperature was decreased to 50°C and during the second wash to room temperature.

The thus obtained catalyst was used along with triethyl-aluminium (TEAL) as co-catalyst and di(cyclopentyl) dimethoxy silane (D-donor) as donor.

The molar ratio of co-catalyst (Co) to external donor (ED) [Co/ED] and the molar ratio of cocatalyst (Co) to titanium compound (TC) [Co/TC] are indicated in table 1.

Polymerization was performed in a Borstar pilot plant, comprising a prepolymerization reactor, a loop reactor and three gas phase reactors. The polymerization conditions are also indicated in table 1.

As mentioned above the Ziegler-Natta catalyst (ZN-C) is preferably modified by the so called BNT-technology during the above mentioned pre-polymerization step in order to introduce a polymeric nucleating agent.

The polymeric nucleating agent is a vinyl polymer, such as a vinyl polymer derived from monomers of the formula

$$CH_2 = CH-CHR^1R^2$$

as described above.

Further details regarding BNT technology are given, for example, in WO 99/ 24478, WO 99/ 24479 and particularly WO 00/ 68315.

All inventive materials contain the stabilization package according to table 1.

**Table 1: Stabilization Package**

| 0.33 wt.% | Antistatic agent | Glycerol esters | Dimodan HP FF from Danisco/Dupont |
|---|---|---|---|
| 0.15 wt.% | Antioxidant | Blend of Phenolic AO and phosphite | Irganox B215 (FF) from BASF |
| 0.05 wt.% | Acid Scavenger | Calcium Stearates | Ceasit SW Veg from FACI |
| 0.07 wt.% | Antistatic agent | Glycerol ester | Dimodan ML 90-1 from Danisco/Dupont |
| 1.9 wt.% | | | Talco HM2* |
| * HM2 manufactured by IMI-Fabi (Italy) having a median particle size d50 of 2.4 µm, a cutoff particle size d95 of 7.7 µm and a specific surface of 21 m²/g. | | | |

**Comparative Examples**

Polymerization conditions for CE1 to CE4 are indicated in table 2.

In CE2, the catalyst used was a conventional phthalate-based Ziegler-Natta catalyst. In CE1, CE3 and CE4, the catalyst used was the same as for IE1 and IE2 above.

Moreover, CE2 corresponds to IE2 of WO 2012/016965A; CE3 corresponds to IE4 of EP 3015504A1 and CE4 corresponds to IE3 of WO 2017/148970A1; polymerization conditions being the same as detailed in the respective earlier publications.

The properties of the products obtained from the individual reactors naturally are not measured on homogenized material but on reactor samples (spot samples). The properties of the final resin are measured on homogenized material, the $MFR_2$ on pellets made thereof in an extrusion mixing process as described below.

The polymer properties for Inventive Examples IE1 and IE2, as well as for Comparative Examples CE1 to CE4 are listed in Table 3.

Data relating to the products, given in Table 3 below, was measured on extruded pellets after stabilization and homogenization of the HECOs.

**Table 2: Polymerization conditions of inventive and comparative examples**

| | CE1 | CE2 | CE3 | CE4 | IE1 | IE2 |
|---|---|---|---|---|---|---|
| **PREPOLY** | | | | | | |
| **Temperature** | 30 | 30 | 30 | 28 | 30 | 30 |
| **Teal / Ti** | 144 | - | 144 | 390 | 263 | 167 |
| **Teal / D** | 7.6 | 14 | 7.6 | 7 | 15 | 15 |
| **Loop (A1)** | | | | | | |
| Temperature (°C) | 80 | 70 | 80 | 75 | 70 | 70 |
| Pressure (barg) | 53 | 55 | - | 55 | 55 | 55 |
| H2/C3 ratio (mol/kmol) | 25.4 | 25 | 25.4 | 26.7 | 35.7 | 35.4 |
| MFR2 (A1) (g/10 min) | 310 | 234 | 310 | 511 | 345 | 480 |
| amount made in loop (%) | 40 | 36 | 40 | 44 | 39 | 43 |
| XCS (%) | 2.6 | 2.2 | 2.6 | 4.2 | 3.4 | 4.2 |
| **GPR1 (A3)** | | | | | | |
| Temperature (°C) | 80 | 80 | 80 | 80 | 80 | 80 |
| Pressure (barg) | 27 | 20 | 27 | 21 | 23 | 23 |
| H2/C3 ratio (mol/kmol) | 147 | 180 | 147 | 202.6 | 208.95 | 197 |
| MFR2 (A3) made in GPR1 | - | 151 | | 210 | 345 | 276 |
| amount made in GPR1 (%) | 40 | 31 | 40 | 38 | 32 | 31 |
| XCS (%) | 2.4 | 1.7 | 2.4 | 2.5 | 2.5 | 3.5 |
| MFR2 (A1 + A3) (g/10 min) | 204 | 190 | 204 | 339 | 345 | 380 |
| **GPR2 (A2)\*** | | | | | | |
| Temperature (°C) | - | 90 | | 75 | 90 | 90 |
| Pressure (barg) | - | 29 | | 19 | 21 | 21 |
| C2/C3 ratio (mol/kmol) | - | - | | 119 | 4 | 4 |
| H2/C2 ratio (mol/kmol) | - | 30 | | 171.7 | 9999 | 5091 |
| MFR2 (A2) made in GPR2 | - | 4.7 | - | - | 12.9 | 2.1 |
| C2 total (wt.-%) | - | - | | 3.3 | - | - |
| PP C2(XCS) (%) | - | - | - | 27.5 | - | - |
| PP IV(XCS) (dl/g) | - | - | - | 2.8 | - | - |
| amount made in GPR2 (%) | - | 25 | | 11 | 9 | 7 |
| XCS (%) | - | 1.7 | - | 12.2 | 2 | 3 |
| MFR2 (A) (g/10 min) | - | 74 | | 120 | 240 | 223 |
| **GPR3 (B)#** | | | | | | |
| Temperature (°C) | 75 | 80 | 75 | 80 | 80 | 80 |
| Pressure (barg) | 25 | 26 | 25 | 17 | 19 | 19 |
| XCS (%) | 20 | 13.4 | 17 | 20 | 20.6 | 22 |
| amount made in GPR3 | 20 | 8 | 20 | 7 | 20 | 19 |
| C2/C3 ratio (mol/kmol) | 402 | 497 | 402 | 351 | 212 | 219 |

(continued)

| GPR3 (B)# | | | | | | |
|---|---|---|---|---|---|---|
| H2/C3 ratio (mol/kmol) | 159 | 92 | 159 | 45 | 41 | 132 |
| **Product** | | | | | | |
| PP MFR2 (g/10min) | 68 | 44 | 80 | 83 | 65 | 64 |
| PP XCS (%) | - | 13 | 19 | 20 | 21 | 22 |
| PP SF (%) | 18 | - | - | - | 21 | 22 |
| C2 total (wt.-%) | 9.1 | | 8.4 | 7.2 | 8.3 | 6.5 |
| PP C2(XCS) (%) | - | 36.3 | 43.4 | 36 | | |
| PP C2(SF) | 36 | - | - | - | 30.1 | 27.95 |
| PP IV(SF) | 3.3 | - | - | - | 2.7 | 2.4 |
| PP IV(XCS) (dl/g) | - | 2.5 | 3.2 | 3.2 | | |
| **\* B1 for CE4; #B2 for CE4** | | | | | | |

**Table 3: Polymer properties**

| | | CE1 | CE2 | CE3 | CE4 | IE1 | IE2 |
|---|---|---|---|---|---|---|---|
| CFC-results | rel. Fraction logM>6 (Tel >115°C) | 1.1 | 2.1 | n.d | n.d | 1.4 | 1.9 |
| | rel.Fraction logM> 5.5 (122< Tel < 130) | 9.8 | 18.1 | n.d | n.d | 10.7 | 11.1 |
| | rel. Fraction logM< 3.5 (Tel < 80°C) | 2.6 | 2 | n.d | n.d | 3.4 | 3.7 |
| | (rel. Fraction logM>5.5 x Fraction logM<3.5)*MFR | 1784 | 1593 | n.d | n.d | 2365 | 2629 |
| | Iso-PP in wt.-% | 71.9 | 76.8 | n.d | n.d | 70.4 | 66.9 |
| thermal properties | MELTING TEMPERATURE Tm1 | 166 | 167 | 164 | n.d | 165 | 165 |
| | MELT ENTHALPY HoF1 | 93 | 98 | 83 | n.d | 100 | 88 |
| | CRYSTALLISATION TEMP. Tcr | 130 | 126 | 123 | n.d | 128 | 130 |
| | CRYSTALLISATION HEAT HoC | 92 | 93 | - | n.d | 90 | 83 |
| tensile testing | TENSILE MODULUS | 1520 | 1743 | - | 1387 | 1460 | 1518 |
| | TENSILE STRENGTH | 26 | 30.8 | - | 26.3 | 24.8 | 25.5 |
| | TENSILE STRAIN AT TENSILE STRENGTH | 4 | 4 | - | 5.4 | 4.2 | 4.1 |
| | TENSILE STRAIN AT BREAK | - | 16.6 | - | n.d | 13.2 | 7.8 |
| NIS (23 °C) | Notched IMPACT STRENGTH @23 °C | 5.0 | 4.9 | 5.6 | 7.5 | 7.6 | 7.4 |
| | Notched IMPACT STRENGTH @-20 °C | 3.3 | 2.7 | 3 | 2.5 | 4.3 | 4.3 |
| instumented falling weight (23 °C) | MAXIMUM FORCE | 1024 | 2455 | 2016 | 2221 | 1065 | 1022 |
| | DEFLECTION AT MAX. FORCE | 10.03 | 10.5 | 12.3 | 11.9 | 11 | 11.6 |
| | ENERGY TO MAX. FORCE | 5.74 | 13.6 | 13.7 | 15 | 6.4 | 6.3 |
| | PUNCTURE DEFLECTION | 11.24 | 10.9 | 19.1 | 14.5 | 16.9 | 17.4 |
| | Epunct-Efmax | 1.2 | 0.9 | 11.3 | 5.5 | 5.2 | 5.0 |
| | PUNCTURE ENERGY | 6.9 | 14.5 | 25 | 20.5 | 11.6 | 11.3 |
| | IPT failure mode | 3.3 | | | 3.2 | 2 | 2.5 |
| | sample thickness (mm) | 1 | 1 | 2 | 2 | 1 | 1 |

| | | | | | | | |
|---|---|---|---|---|---|---|---|
| instrumented falling weight (-20 °C) | MAXIMUM FORCE | 1239 | 2560 | 2852 | 1774 | 1526 | 1433 |
| | DEFLECTION AT MAX. FORCE | 6.92 | 6.7 | 11.4 | 5.2 | 8.9 | 9.1 |
| | ENERGY TO MAX. FORCE | 4.17 | 8.1 | 17.5 | 4.14 | 7.7 | 7.8 |
| | Epunct-Efmax | 0.08 | 0.2 | 3 | 0.12 | 0.1 | 0 |
| | PUNCTURE DEFLECTION | 7 | 6.8 | 12.6 | 5.4 | 8.9 | 9.2 |
| | PUNCTURE ENERGY | 4.3 | 8.3 | 20.5 | 4.3 | 7.8 | 6.4 |
| | sample thickness (mm) | 1 | 1 | 2 | 2 | 1 | 1 |
| others (DMTA, C6-solubles, HDT) | HDT | 100 | n.d. ? | n.d | n.d | 100 | 99 |
| | C6-solubles acc. FDA | 4.2 | 2.9 | n.d | 3.7 | 3.55 | n.d. |
| | DMTA $tan\delta_1$ | n.d | -56 | -50.6 | -48.7 | -40 | -39 |
| | DMTA $tan\delta_2$ | n.d | - | - | -30.6 | - | - |
| | DMTA $tan\delta_3$ | n.d | 0 | -1.6 | -3 | -2.1 | -0.4 |
| | DMTA $tan\delta_4$ | n.d | 100 | 92.7 | 92.1 | 90 | 93.1 |
| | G´23°C | n.d | 900 | 631 | 710 | 662 | 720 |

From Table 3 it can be clearly seen that the inventive heterophasic polypropylene compositions have an improved puncture respectively impact strength/stiffness balance over the comparative examples.

Furthermore, with regard to impact properties, it is obvious that not only is the puncture energy high in the inventive examples, but at the same time the failure mode indicates ductile behavior, which is a significant improvement over known HECOs (CE1 to CE4).

**Claims**

1.  A heterophasic propylene copolymer composition comprising a heterophasic propylene copolymer (HECO), comprising

    (a) a matrix (A) comprising a propylene homo- or copolymer, said propylene homo- or copolymer comprises at least two propylene homo- and/or copolymer fractions, propylene homo- or copolymer fraction (A1) and propylene homo- or copolymer fraction (A2),
    wherein propylene homo- or copolymer fraction (A1) has a melt flow rate MFR2 (230°C) of 250 g/10 min or more, preferably of 300 g/10min or more, more preferably of more than 300 g/10min, and propylene homo- or copolymer fraction (A2) has a melt flow rate MFR2 (230°C) in the range of from 0.5 to 25 g/10 min, preferably in the range of from 1 to 20 g/10min; and
    (b) an elastomeric propylene copolymer (B), preferably a uni- or bimodal elastomeric propylene copolymer, more preferably a unimodal elastomeric propylene copolymer, dispersed in said matrix (A),

    wherein

    (i) the heterophasic propylene copolymer composition has a melt flow rate MFR2 (230°C) of at least 50 g/10 min;
    (ii) the amount of propylene homo- or copolymer fraction (A1) is from 45 wt.% to 95 wt.% based on the total amount of all propylene homo- and/ or copolymer fractions present in the matrix (A);

(iii) the amount of propylene homo- or copolymer fraction (A2) is from 5 wt.% to less than 15 wt.% based on the total amount of all propylene homo- and/ or copolymer fractions present in the matrix (A); and

(iv) the soluble fraction (SF) according to CRYSTEX QC of the heterophasic propylene copolymer composition comprises more than 18.0 wt.% of the total heterophasic propylene copolymer composition (HECO).

2. The heterophasic propylene copolymer composition according to claim 1, wherein the soluble fraction (SF) of the heterophasic propylene copolymer composition has an intrinsic viscosity (IV) determined during CRYSTEX QC of equal to or higher than 2.0 dl/g, preferably in a range of from 2.4 to 3.0 dl/g.

3. Heterophasic propylene copolymer composition according to claim 1 or 2, wherein the heterophasic propylene copolymer composition has a tensile modulus measured according to ISO 527-2 in a range of from 1300 to 1600 MPa.

4. Heterophasic propylene copolymer composition according to any of the preceding claims, wherein the comonomer present in the matrix (A) is ethylene.

5. Heterophasic propylene copolymer composition according to any of the preceding claims, wherein the heterophasic propylene copolymer composition has a notched impact strength at 23°C (NIS 23°C) in the range of from 6.0 to 10.0 kJ/m , preferably in the range of from 7.0 to 9.0 kJ/m ; and/ or wherein the heterophasic propylene copolymer composition has a notched impact strength at -20°C (NIS -20°C) in the range of from 3.5 to 6.0 kJ/m , preferably in the range of from 4.0 to 6.0 kJ/m , and more preferably in the range of from 4.3 to 5.5 kJ/m .

6. Heterophasic propylene copolymer composition according to any of the preceding claims, wherein the heterophasic propylene copolymer composition has an IPT failure mode of < 3.

7. Heterophasic propylene copolymer composition according to any of the preceding claims, wherein the heterophasic propylene copolymer composition has a hexane soluble fraction in an amount of from 0.0 wt.% to 5.5 wt. %, preferably from 0.0 wt.% to 5 wt. %, more preferably from 0.0 wt.% to 4.5 wt.% and most preferably from 0.0 wt.% to 4.0 wt. %.

8. Heterophasic propylene copolymer composition according to any of the preceding claims, wherein the total content of ethylene in the propylene homo- or copolymer comprised in the matrix (A) is from 0.0 wt.% to 1.0 wt. %.

9. Heterophasic propylene copolymer composition according to any of the preceding claims, wherein a relative fraction logM<3.5, which elutes at T < 80°C, as determined using cross fractionation chromatography, in the total heterophasic propylene copolymer composition makes up from 2.5 wt.% to 5.0 wt.% based on the total heterophasic propylene copolymer composition and/or wherein a relative fraction logM>5.5, which elutes at 122°C < T < 130°C, as determined using cross fractionation chromatography, in the total heterophasic propylene copolymer composition makes up from 10.0 wt.% to 12.0 wt.% based on the total heterophasic propylene copolymer composition.

10. Heterophasic propylene copolymer composition according to any of the preceding claims, wherein the following requirement is met:

$$\text{(relative fraction logM<3.5, which elutes at } T < 80°C) * \text{(relative fraction logM>5.5, which elutes at } 122°C < T < 130°C) * MFR2 > 2000.$$

11. Heterophasic propylene copolymer composition according to any of the preceding claims further comprising a nucleating agent, preferably a polymeric nucleating agent, more preferably polyvinylcyclohexane.

12. Heterophasic propylene copolymer composition according to any of the preceding claims, wherein at least one of the following requirements is met:

a)

$$SF * IV > 50,$$

wherein SF is the amount of a soluble fraction in wt.% and IV is the intrinsic viscosity in dl/ g; and/or

b)

$$E * MFR2 (230°C) * NIS > 700000,$$

with E being the tensile modulus determined according to ISO 527-1 at 23°C, MFR2 (230°C) being the melt flow rate determined according to ISO 1133-1, and NIS being the Charpy Notched Impact Strength determined according to ISO 179-2 1eA at 23°C.

13. Multistage polymerization process for producing a heterophasic propylene copolymer composition according to claim 1, comprising at least three subsequent polymerization steps, in the presence of:

a) a Ziegler-Natta catalyst comprising compounds (TC) of a transition metal of Group 4 to 6 of IUPAC, a Group 2 metal compound and an internal donor, wherein said internal donor is a non-phthalic compound, preferably a non-phthalic acid ester; being selected from the group comprising malonates, maleates, succinates, citraconates, glutarates, cyclohexene-1,2-dicarboxylates and benzoates, and any derivatives and/or mixtures thereof;
b) a co-catalyst (Co);
c) an external donor (ED), wherein said external donor is preferably dicyclopentyl dimethoxy silane; and
d) optionally, a nucleating agent, preferably a polymeric nucleating agent, more preferably polyvinylcyclohexane.

14. Heterophasic propylene copolymer composition obtainable by a multistage polymerization process according to claim 13.

15. Use of a heterophasic propylene copolymer composition according to any one of claims 1 to 12 or according to claim 14 for packaging applications, preferably for low temperature packaging applications.

**Patentansprüche**

1. Heterophasische Propylen-Copolymer-Zusammensetzung mit einem heterophasischen Propylen-Copolymer (HECO), umfassend:

(a) eine Matrix (A), die ein Propylen-Homo- oder Copolymer umfasst, wobei das Propylen-Homo- oder Copolymer wenigstens zwei Propylen-Homo- und/oder Copolymer-Fraktionen, nämlich eine Propylen-Homo- oder Copolymer-Fraktion (A1) und eine Propylen-Homo- oder Copolymer-Fraktion (A2) umfasst,
wobei die Propylen-Homo- oder Copolymer-Fraktion (A1) eine Schmelzflussrate (MFR2) (230°C) von 250 g/10 min oder mehr, vorzugsweise von 300 g/10 min oder mehr und noch besser von mehr als 300 g/10 min aufweist, und wobei die Propylen-Homo- oder Copolymer-Fraktion (A2) eine Schmelzflussrate (MFR2) (230°C) im Bereich von 0,5 bis 25 g/10 min und vorzugsweise im Bereich von 1 bis 20 g/10 min aufweist, und
(b) ein elastomerisches Propylen-Copolymer (B), vorzugsweise ein uni- oder bimodales elastomerisches Propylen-Copolymer und noch besser ein unimodales elastomerisches Propylen-Copolymer, das in der Matrix (A) dispergiert ist,

wobei:

(i) die heterophasische Propylen-Copolymer-Zusammensetzung eine Schmelzflussrate (MFR2) (230°C) von wenigstens 50 g/10 min aufweist,
(ii) der Anteil der Propylen-Homo- oder Copolymer-Fraktion (A1) zwischen 45 Gewichtsprozent und 95 Gewichtsprozent, basierend auf der Gesamtmenge aller Propylen-Homo- und/oder Copolymer-Fraktionen in der Matrix (A) beträgt,
(iii) der Anteil der Propylen-Homo- oder Copolymer-Fraktion (A2) zwischen 5 Gewichtsprozent und weniger als 15 Gewichtsprozent, basierend auf der Gesamtmenge aller Propylen-Homo- und/oder Copolymer-Fraktionen in der Matrix (A) beträgt,
(iv) die lösliche Fraktion (SF) gemäß CRYSTEX QC der heterophasischen Propylen-Copolymer-Zusammensetzung mehr als 18,0 Gewichtsprozent der gesamten heterophasischen Propylen-Copolymer-Zusammensetzung (HECO) beträgt.

2. Heterophasische Propylen-Copolymer-Zusammensetzung nach Anspruch 1, wobei die lösliche Fraktion (SF) der heterophasischen Propylen-Copolymer-Zusammensetzung eine intrinsische Viskosität (IV), bestimmt während CRYSTEX QC, von gleich oder höher als 2,0 dl/g und vorzugsweise im Bereich von 2,4 bis 3,0 dl/g aufweist.

3. Heterophasische Propylen-Copolymer-Zusammensetzung nach Anspruch 1 oder 2, wobei die heterophasische Propylen-Copolymer-Zusammensetzung ein Zugmodul, gemessen gemäß ISO 527-2, im Bereich von 1300 bis 1600 MPa aufweist.

4. Heterophasische Propylen-Copolymer-Zusammensetzung nach einem der vorstehenden Ansprüche, wobei das in der Matrix (A) vorhandene Comonomer Ethylen ist.

5. Heterophasische Propylen-Copolymer-Zusammensetzung nach einem der vorstehenden Ansprüche, wobei die heterophasische Propylen-Copolymer-Zusammensetzung eine Kerbschlagzähigkeit bei 23°C (NIS 23°C) im Bereich von 6,0 bis 10,0 kJ/m und vorzugsweise im Bereich von 7,0 bis 9,0 kJ/m aufweist und/oder wobei die heterophasische Propylen-Copolymer-Zusammensetzung eine Kerbschlagzähigkeit bei -20°C (NIS -20°C) im Bereich von 3,5 bis 6,0 kJ/m, vorzugsweise im Bereich von 4,0 bis 6,0 kJ/m und noch besser im Bereich von 4,3 bis 5,5 kJ/m aufweist.

6. Heterophasische Propylen-Copolymer-Zusammensetzung nach einem der vorstehenden Ansprüche, wobei die heterophasische Propylen-Copolymer-Zusammensetzung einen IPT-Fehlermodus von < 3 aufweist.

7. Heterophasische Propylen-Copolymer-Zusammensetzung nach einem der vorstehenden Ansprüche, wobei die heterophasische Propylen-Copolymer-Zusammensetzung eine hexanlösliche Fraktion mit einem Anteil zwischen 0,0 Gewichtsprozent und 5,5 Gewichtsprozent, vorzugsweise zwischen 0,0 Gewichtsprozent und 5 Gewichtsprozent, noch besser zwischen 0,0 Gewichtsprozent und 4,5 Gewichtsprozent und am besten zwischen 0,0 Gewichtsprozent und 4,0 Gewichtsprozent aufweist.

8. Heterophasische Propylen-Copolymer-Zusammensetzung nach einem der vorstehenden Ansprüche, wobei der Gesamtanteil von Ethylen in dem Propylen-Homo- oder Copolymer in der Matrix (A) zwischen 0,0 Gewichtsprozent und 1,0 Gewichtsprozent beträgt.

9. Heterophasische Propylen-Copolymer-Zusammensetzung nach einem der vorstehenden Ansprüche, wobei eine relative Fraktion logM<3,5, die bei T < 80°C eluiert, wie unter Verwendung einer Kreuzfraktionierungschromatographie bestimmt, in der gesamten heterophasischen Propylen-Copolymer-Zusammensetzung zwischen 2,5 Gewichtsprozent und 5,0 Gewichtsprozent, basierend auf der gesamten heterophasischen Propylen-Copolymer-Zusammensetzung, beträgt und/oder wobei eine relative Fraktion logM>5,5, die bei 122°C < T < 130°C eluiert, wie unter Verwendung einer Kreuzfraktionierungschromatographie bestimmt, in der gesamten heterophasischen Propylen-Copolymer-Zusammensetzung zwischen 10,0 Gewichtsprozent und 12,0 Gewichtsprozent, basierend auf der gesamten heterophasischen Propylen-Copolymer-Zusammensetzung, beträgt.

10. Heterophasische Propylen-Copolymer-Zusammensetzung nach einem der vorstehenden Ansprüche, wobei die folgende Anforderung erfüllt wird:

(relative Fraktion logM<3,5, die bei T < 80°C eluiert) * (relative Fraktion logM>5,5, die bei 122°C < T < 130°C eluiert) * MFR2 > 2000.

11. Heterophasische Propylen-Copolymer-Zusammensetzung nach einem der vorstehenden Ansprüche, die weiterhin einen Keimbildner, vorzugsweise einen polymerischen Keimbildner und noch besser Polyvinylcyclohexan umfasst.

12. Heterophasische Propylen-Copolymer-Zusammensetzung nach einem der vorstehenden Ansprüche, wobei wenigstens eine der folgenden Anforderungen erfüllt wird:

a)

$$SF * IV > 50,$$

wobei SF der Anteil einer löslichen Fraktion in Gewichtsprozent ist und IV die intrinsische Viskosität in dl/g ist, und/oder
b)

$$E * MFR2 (230°C) * NIS > 700000,$$

wobei E das Zugmodul, bestimmt gemäß ISO 527-1 bei 23°C, ist, MFR2 (230°C) die Schmelzflussrate, bestimmt gemäß ISO 1133-1, ist und NIS die Charpy-Kerbschlagzähigkeit, bestimmt gemäß ISO 179-2 1eA bei 23°C ist.

13. Mehrstufiger Polymerisationsprozess zum Erzeugen einer heterophasischen Propylen-Copolymer-Zusammensetzung nach Anspruch 1, der wenigstens drei aufeinanderfolgende Polymerisationsschritte in Anwesenheit von Folgendem umfasst:

a) eines Ziegler-Natta-Katalysators, der Verbindungen (TC) eines Übergangsmetalls der Gruppen 4 bis 6 der IUPAC-Nomenklatur, eine Gruppe-2-Metallvebindung und einen internen Donor umfasst, wobei der interne Donor eine nicht-phthalische Verbindung und vorzugsweise ein nicht-phthalischer Säureester ist, der aus der Gruppe ausgewählt ist, die Malonate, Maleate, Succinate, Citaconate, Glutarate, Cyclohexen-1,2-dicarboxylate und Bezonate sowie beliebige Derivate und/oder Mischungen aus diesen umfasst,
b) eines Cokatalysators (Co),
c) eines externen Donors (ED), wobei der externe Donor vorzugsweise Dicyclopentyldimethoxysilan ist, und
d) optional eines Keimbildners, vorzugsweise eines polymerischen Keimbildners und noch besser von Polyvinylcyclohexan.

14. Heterophasische Propylen-Copolymer-Zusammensetzung, die durch den mehrstufigen Polymerisationsprozess von Anspruch 13 erhalten werden kann.

15. Verwendung einer heterophasischen Propylen-Copolymer-Zusammensetzung gemäß den Ansprüchen 1 bis 12 oder gemäß Anspruch 14 für Verpackungsanwendungen und vorzugsweise für Niedertemperatur-Verpackungsanwendungen.

**Revendications**

1. Composition de copolymère de propylène hétérophasique comprenant un copolymère de propylène hétérophasique (HECO), comprenant

(a) une matrice (A) comprenant un homo- ou copolymère de propylène, ledit homo- ou copolymère de propylène comprend au moins deux fractions d'homo- et/ou de copolymère de propylène, la fraction d'homo- ou de copolymère de propylène (A1) et la fraction d'homo- ou de copolymère de propylène (A2),
dans laquelle la fraction d'homo- ou de copolymère de propylène (A1) a un indice de fluidité à chaud MFR2 (230 °C) de 250 g/10 min ou plus, préférablement de 300 g/10 min ou plus, plus préférablement de plus de 300 g/10 min, et la fraction d'homo- ou de copolymère de propylène (A2) a un indice de fluidité à chaud MFR2 (230 °C) dans la plage allant de 0,5 à 25 g/10 min, de préférence dans la plage allant de 1 à 20 g/10 min ; et
(b) un copolymère élastomère de propylène (B), de préférence un copolymère élastomère de propylène uni- ou bimodal, plus préférablement un copolymère élastomère de propylène unimodal, dispersé dans ladite matrice (A), dans laquelle

(i) la composition de copolymère de propylène hétérophasique a un indice de fluidité à chaud MFR2 (230 °C) d'au moins 50 g/10 min ;
(ii) la quantité de fraction d'homo- ou de copolymère de propylène (A1) est de 45 % en poids à 95 % en poids par rapport à la quantité totale de toutes les fractions d'homo- et/ou de copolymère de propylène présentes dans la matrice (A) ;
(iii) la quantité de fraction d'homo- ou de copolymère de propylène (A2) est de 5 % en poids à moins de 15 % en poids par rapport à la quantité totale de toutes les fractions d'homo- et/ou de copolymère de propylène présentes dans la matrice (A) ; et
(iv) la fraction soluble (FS) selon CRYSTEX QC de la composition de copolymère de propylène hétérophasique constitue plus de 18,0 % en poids de la composition totale de copolymère de propylène hétérophasique (HECO).

2. Composition de copolymère de propylène hétérophasique selon la revendication 1, dans laquelle la fraction soluble (FS) de la composition de copolymère de propylène hétérophasique a une viscosité intrinsèque (VI) déterminée selon le CRYSTEX QC égale ou supérieure à 2,0 dl/g, de préférence dans une plage allant de 2,4 à 3,0 dl/g.

3.  Composition de copolymère de propylène hétérophasique selon la revendication 1 ou 2, dans laquelle la composition de copolymère de propylène hétérophasique a un module de traction mesuré selon la norme ISO 527-2 dans une plage de 1 300 à 1 600 MPa.

4.  Composition de copolymère de propylène hétérophasique selon l'une quelconque des revendications précédentes, dans laquelle le comonomère présent dans la matrice (A) est l'éthylène.

5.  Composition de copolymère de propylène hétérophasique selon l'une quelconque des revendications précédentes, dans laquelle la composition de copolymère de propylène hétérophasique a une résilience à l'impact sur éprouvette entaillée à 23 °C (NIS 23 °C) dans la plage allant de 6,0 à 10,0 kJ/m, préférablement dans la plage allant de 7,0 à 9,0 kJ/m ; et/ou dans laquelle la composition de copolymère de propylène hétérophasique a une résistance à l'impact sur éprouvette entaillée à -20 °C (NIS -20 °C) dans la plage allant de 3,5 à 6,0 kJ/m, préférablement dans la plage allant de 4,0 à 6,0 kJ/m, et plus préférablement dans la plage allant de 4,3 à 5,5 kJ/m.

6.  Composition de copolymère de propylène hétérophasique selon l'une quelconque des revendications précédentes, dans laquelle la composition de copolymère de propylène hétérophasique a un mode de défaillance IPT < 3.

7.  Composition de copolymère de propylène hétérophasique selon l'une quelconque des revendications précédentes, dans laquelle la composition de copolymère de propylène hétérophasique a une fraction soluble dans l'hexane en une quantité allant de 0,0 % en poids à 5,5 % en poids, préférablement de 0,0 % en poids à 5 % en poids, plus préférablement de 0,0 % en poids à 4,5 % en poids et le plus préférablement de 0,0 % en poids à 4,0 % en poids.

8.  Composition de copolymère de propylène hétérophasique selon l'une quelconque des revendications précédentes, dans laquelle la teneur totale en éthylène de l'homo- ou du copolymère de propylène compris dans la matrice (A) est de 0,0 % en poids à 1,0 % en poids.

9.  Composition de copolymère de propylène hétérophasique selon l'une quelconque des revendications précédentes, dans laquelle une fraction relative logM<3,5, qui élue à T < 80 °C, telle que déterminée par chromatographie de fractionnement croisé, dans la composition totale de copolymère de propylène hétérophasique représente de 2,5 % en poids à 5,0 % en poids sur la base de la composition totale de copolymère de propylène hétérophasique et/ou dans laquelle une fraction relative logM>5,5,
qui élue à 122 °C < T < 130 °C, tel que déterminé en utilisant la chromatographie de fractionnement croisé, dans la composition totale de copolymère de propylène hétérophasique représente de 10,0 % en poids à 12,0 % en poids sur la base de la composition totale de copolymère de propylène hétérophasique.

10. Composition de copolymère de propylène hétérophasique selon l'une quelconque des revendications précédentes, dans laquelle la condition suivante est satisfaite :

$$\text{(fraction relative logM<3,5, qui élue à T < 80 °C)} * \text{(fraction relative logM>5,5,}$$
$$\text{qui élue à 122 °C < T < 130 °C)} * \text{MFR2} > 2\,000.$$

11. Composition de copolymère de propylène hétérophasique selon l'une quelconque des revendications précédentes, comprenant en outre un agent de nucléation, préférablement un agent de nucléation polymère, plus préférablement le polyvinylcyclohexane.

12. Composition de copolymère de propylène hétérophasique selon l'une quelconque des revendications précédentes, dans laquelle au moins l'une des conditions suivantes est satisfaite :

a)

$$FS * VI > 50,$$

dans laquelle FS est la quantité d'une fraction soluble en % en poids et VI est la viscosité intrinsèque en dl/ g ; et/ou

b)

$$E * MFR2 (230°C) * NIS > 700\,000,$$

E étant le module de traction déterminé selon la norme ISO 527-1 à 23 °C, MFR2 (230 °C) étant l'indice de fluidité à chaud déterminé selon la norme ISO 1133-1, et NIS étant la résistance à l'impact sur éprouvette entaillée de Charpy déterminée selon la norme ISO 179-2 1eA à 23 °C.

13. Procédé de polymérisation en plusieurs étapes pour la production d'une composition de copolymère de propylène hétérophasique selon la revendication 1, comprenant au moins trois étapes de polymérisation sucessives, en présence de :

a) un catalyseur Ziegler-Natta comprenant des composés (TC) d'un métal de transition des groupes 4 à 6 de l'UICPA, un composé de métal du groupe 2 et un donneur interne, dans lequel ledit donneur interne est un composé non phtalique, préférablement un ester d'acide non phtalique, choisi dans le groupe comprenant les malonates, les maléates, les succinates, les citraconates, les glutarates, les cyclohexène-1,2-dicarboxylates et les benzoates, ainsi que leurs dérivés et/ou leurs mélanges ;
b) un co-catalyseur (Co) ;
c) un donneur externe (ED), dans lequel ledit donneur externe est préférablement le dicyclopentyl diméthoxy silane ; et
d) éventuellement, un agent de nucléation, de préférence un agent de nucléation polymère, plus préférablement le polyvinylcyclohexane.

14. Composition de copolymère de propylène hétérophasique pouvant être obtenue par un procédé de polymérisation en plusieurs étapes selon la revendication 13.

15. Utilisation d'une composition de copolymère de propylène hétérophasique selon l'une quelconque des revendications 1 à 12 ou selon la revendication 14 pour des applications d'emballage, préférablement pour des applications d'emballage à basse température.

Figure 1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012016965 A1
- EP 3015504 A1
- WO 2017148970 A1
- WO 9924478 A
- WO 9924479 A
- WO 0068315 A
- EP 0887379 A
- WO 9212182 A
- WO 2004000899 A
- WO 2004111095 A
- WO 2012016965 A

**Non-patent literature cited in the description**

- *CHEMICAL ABSTRACTS,* 88-99-3
- **DEL HIERRO, P. ; ORTIN, A. ; MONRABAL, B.** Soluble Fraction Analysis in polypropylene. *The Column Advanstar Publications,* February 2014, 18-23
- **ORTIN A. ; MONRABAL B. ; SANCHO-TELLO J.** *Macromol. Symp.,* 2007, vol. 257, 13-28